# EUROPEAN PATENT SPECIFICATION

(11) **EP 0 510 906 B1**
(45) Date of publication and mention of the grant of the patent: **13.03.1996**
(21) Application number: 92303531.5
(22) Date of filing: 21.04.1992
(51) Int. Cl.: F16B 13/06, F16B 13/00

(54) **Anchor Bolts**
Ankerbolzen
Boulons d'ancrage

(30) Priority: 20.04.1991 GB 9108480; 29.05.1991 GB 9111541
(43) Date of publication of application: 28.10.1992
(73) Proprietor: THE RAWLPLUG COMPANY LIMITED, Derby DE2 4EE (GB)
(72) Inventor: Paul, Graham Donald, Larkhall, Lanarkshire ML9 2AW (GB); Abbott, George, Glasgow G44 3HG (GB)
(74) Representative: Pattullo, Norman

(56) References cited:
- AT-B- 354 706
- DD-A- 294 761
- DE-A- 2 103 132
- DE-A- 2 720 490
- DE-A- 3 524 239
- GB-A- 2 153 032

## Description

This invention relates to anchor bolts, and relates more particularly but not exclusively to an anchor bolt comprising an assembly of a radially expansible and axially collapsible sleeve with an axially elongate and externally screw-threaded fastener means.

Anchor bolts which are set into prepared holes in a solid material or substrate (eg concrete) commonly utilise a metal sleeve radially expanded into the hole either by means of a tapered end of the bolt stem remote from the end of the bolt stem projecting from the substrate or by means of a tapered nut engaged by an inserted bolt whose head remains projecting from the substrate. (Such sleeve-type anchor bolt fixings are respectively known as "bolt projecting" and "loose bolt" type "expanding bolt fixings"). In order adequately to secure a fixture to a substrate using a sleeve-type fixing as described above, it is desirable that the fixing incorporates a mechanism which effectively permits an at least partial axial collapse of the sleeve. The setting torque applied to the fixing thus results in an axial clamping force acting though the fixture and reacted by the face of the solid material or substrate, rather than a compressive force which is reacted solely by the sleeve into itself in the absence of such axial collapse. Hitherto, anchor bolt sleeves which are radially expansible and axially collapsible have been formed of several components or of single components requiring machining operations. Such anchor bolt sleeves are therefore expensive and time-consuming to manufacture.

DE-A-3425239 discloses an expansion dowel formed from sheet metal and in which the dowel expander is also formed from the same piece of sheet metal. The expander is initially a strip of metal which is bent into a circumferentially split circle. This split circle is lodged inside one end of the dowel sleeve, and prevented from becoming lost by being fixed to the sleeve by means of strips of the sheet metal. The strips are deformable to allow the expander to be pulled into the sleeve by the fixing bolt when it is screwed into the expander. When the expansion dowel of DE-A-3425329 is in use, the sleeve lacks any means permitting an at least partial axial collapse of the sleeve.

DE-A-2720490 discloses a tube coupling in which one component is sleeve-like and formed of sheet metal. This sleeve-like component is actually a latch for an end fitting of a tube. The component is neither intended nor suitable for use as part of an anchor bolt assembly. Moreover, the sleeve-like component lacks any specific provision for an at least partial axial collapse (which would constitute a total malfunction).

It is therefore an object of the invention to provide an anchor bolt assembly comprising a radially expansible and axially collapsible sleeve in the form of a unitary component not requiring machining operations.

According to a first aspect of the present invention there is provided an anchor bolt comprising an assembly of a radially expansible and axially collapsible sleeve with an axially elongate and externally screw-threaded fastener means, characterised in that said sleeve comprises a closed collar at one end of the sleeve, said sleeve further comprising a plurality of wings angularly distributed around the sleeve, each said wing being linked to said collar by at least one respective strut which is collapsible upon a sufficient axial stress being applied to said sleeve, said collar, wings and struts being formed as a unitary component, said fastener means extending axially through said sleeve and through said collar at said one end of the sleeve, and an externally tapered expander means being internally engaged with said fastener means and externally engaged or engageable with the other end of said sleeve opposite said one end of said sleeve.

Said sleeve is preferably such that said wings collectively form a substantially cylindrical periphery of said sleeve.

Said plurality of wings may number two, and preferably each has a substantially hemi-cylindrical transverse section.

Said sleeve is preferably formed of sheet metal, preferably steel (which may be stainless steel).

Said anchor bolt may further comprise a compression bush means encompassing said fastener means on a portion thereof projecting through said collar away from the remainder of said sleeve, said compression bush means being axially slidable on said fastener means to apply axial compressive forces to said collar in a direction tending to cause collapse of said struts in use of said anchor bolt. At least the end of said compression bush means adjacent said collar is preferably radially dimensioned to lie radially within the periphery of said collar. Said compression bush means may have the form of a right cylinder, and is conveniently fabricated as a length of metal tubing.

Said expander means preferably has a conical outer surface converging in the direction towards said collar. Said expander means may have the form of an internally-threaded nut in screw-threaded engagement with the external screw thread on said fastener means, and said fastener means may have a tool-engageable head integrally formed on the other end thereof whereby to constitute a "loose bolt" type of "expanding bolt fixing" (or anchor bolt) as aforementioned. Alternatively said expander means may be engaged with said fastener means by being permanently secured thereto or formed integrally therewith, and said fastener means may have a nut or like fastener element screw-threaded onto the outer end of said fastener means whereby to constitute a "bolt projecting" type of "expanding bolt fixing" (or anchor bolt) as aforementioned.

According to a second aspect of the present invention there is provided a method of manufacturing an anchor bolt comprising an assembly of a radially expansible and axially collapsible sleeve with an axially elongate and externally screw-threaded fastener means together with an externally tapered expander means, said method comprising the steps of providing a sheet of ductile material, removing portions of said material from said sheet to provide a closed annulus from which extend a plurality of radially-extending wings at angularly spaced positions around the annulus, each of the wings being connected to the annulus through at least once respective strut of reduced strength as compared to the wing, and bending each of the wings and its associated strut or struts about the collar until the wings extend substantially normal to the plane of the annulus thereby to form said sleeve with said collar at one end of thereof, said method further comprising the additional steps of providing a said fastener means and a said expander means, locating said sleeve around said fastener means such that said fastener means extends axially through said sleeve and through said collar at said one end of said sleeve, and internally engaging said expander means with said fastener means such that said expander means is externally engaged or engageable with the other end of said sleeve opposite said one end of said sleeve.

According to the third aspect of the present invention there is provided a kit of parts for assembling an anchor bolt according to the first aspect of the present invention, characterised in that said kit of parts comprises a sleeve, a fastener means, and an expander means; said sleeve being radially expansible and axially collapsible; said sleeve comprising a closed collar at one end of the sleeve; said sleeve further comprising a plurality of wings angularly distributed around the sleeve; each said wing being linked to said collar by at least one respective strut which is collapsible upon a sufficient axial stress being applied to said sleeve; said collar, wings and struts being formed as a unitary component; said fastener means being axially elongate and externally screw-threaded and being capable of extending axially through the sleeve and collar; and said expander means being externally tapered so as to be engagable with the sleeve and being internally engageable with said fastener means.

Embodiments of the invention will now be described by way of example, with reference to the accompanying drawings, in which:
Fig 1 shows the outline of a sheet blank of a first embodiment of sleeve forming part of the present invention;
Fig 2 is a side view of the first embodiment of sleeve made from the blank of Fig 1;
Fig 3 is another side view of the first embodiment of sleeve, viewed at right angles to the viewpoint of Fig 2;
Fig. 4 shows the outline of a sheet blank of a second embodiment of sleeve forming part of the present invention;
Fig. 5 is a side view of the second embodiment of sleeve made from the blank of Fig. 4;
Fig. 6 is another side view of the second embodiment of sleeve, viewed at right angles to the viewpoint of Fig. 5;
Fig. 7 shows the outline of a sheet blank of a third embodiment of sleeve forming part of the present invention;
Fig. 8 is a side view of the third embodiment of sleeve made from the blank of Fig. 7;
Fig. 9 is another side view of the third embodiment of sleeve, viewed at right angles to the viewpoint of Fig. 8;
Fig. 10 shows the outline of a sheet blank of a fourth embodiment of sleeve forming part of the present invention;
Fig. 11 is a side view of the fourth embodiment of sleeve made from the blank of Fig. 10;
Fig. 12 is another side view of the fourth embodiment of sleeve, viewed at right angles to the viewpoint of Fig. 11;
Fig. 13 shows the outline of a sheet blank of a fifth embodiment of sleeve forming part of the present invention;
Fig. 14 is a side view of the fifth embodiment of sleeve made from the blank of Fig. 13;
Fig. 15 is another side of the fifth embodiment of sleeve, viewed at right angles to the viewpoint of Fig. 14;
Fig. 16 shows the outline of a sheet blank of a sixth embodiment of sleeve forming part of the present invention;
Fig. 17 is a side view of the sixth embodiment of sleeve made from the blank of Fig. 16;
Fig. 18 is another side view of the sixth embodiment of sleeve, viewed at right angles to the viewpoint of Fig. 17;
Figs. 19 and 20 are side views of a seventh embodiment of sleeve forming part of the present invention, with respective viewpoints mutually at right angles, this seventh embodiment of sleeve being incorporated into an assembly of components constituting an embodiment of anchor bolt in accordance with the present invention;
Fig. 21 is a side view of an eighth embodiment of sleeve forming part of the present invention; and
Fig. 22 is a detail of the eighth embodiment of sleeve, to an enlarged scale.

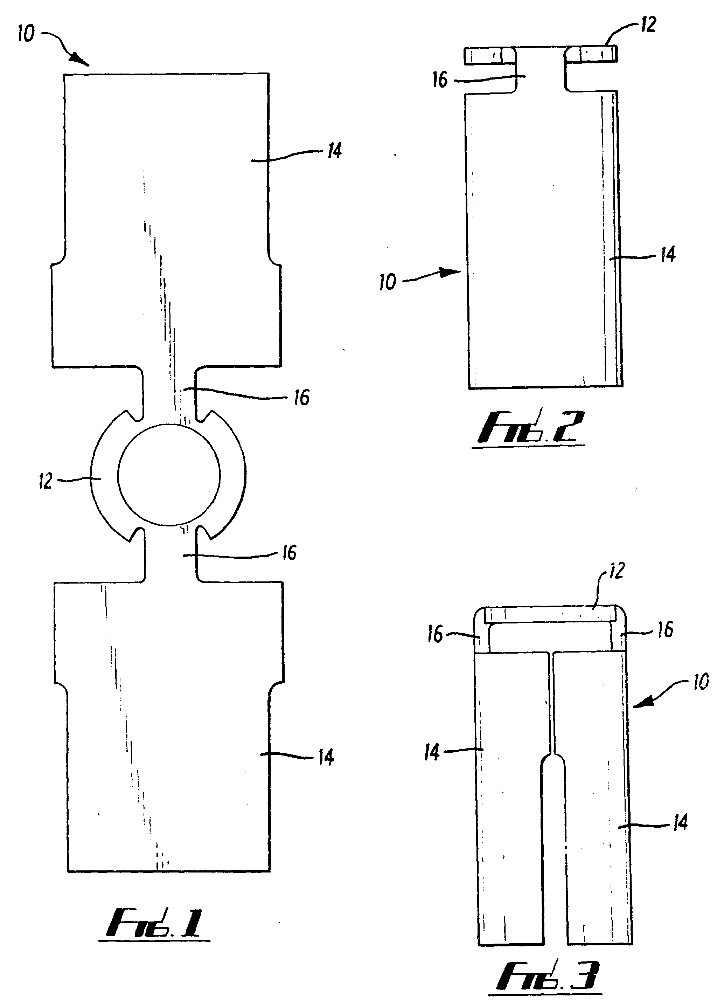

Before referring to the drawings in detail, it will be explained that since the eight embodiments of sleeve have principal features thereof in common, only the first embodiment (Figs. 1-3) will be described in full detail, and the descriptions of the subsequent embodiments will concentrate on the details of the differences thereof with respect to the first embodiment. Those parts of the second and subsequent embodiments which are essentially the same as corresponding parts of the first or other preceding embodiments will be designated by the same reference numerals but preceded by a further reference numeral; "1" for the second embodiment, "2" for the third embodiment, etc. Accordingly, for a full description of those parts of the second and subsequent embodiment not fully described per se, reference should be made to the preceding description of the corresponding parts of the first or other preceding embodiments.

Referring now to Fig. 1, a first embodiment of sleeve blank 10 comprises a central collar 12 of generally annular shape, a diametrically opposed pair of wings 14, and a pair of struts 16 each joining one of the wings 14 to the collar 12 at diametrically opposite sides thereof. The sleeve blank 10 is formed from sheet steel by a series of sequential press-forming and shaping operations, Fig. 1 showing the outline of the blank 10 as it would be if fully cropped and punched but not subjected to any bending. (In practice, some outline cutting operations may have intervening bending operations, such that the illustrated sleeve blank 10 would not appear as such but exist only as a hypothetical geometric ideal).

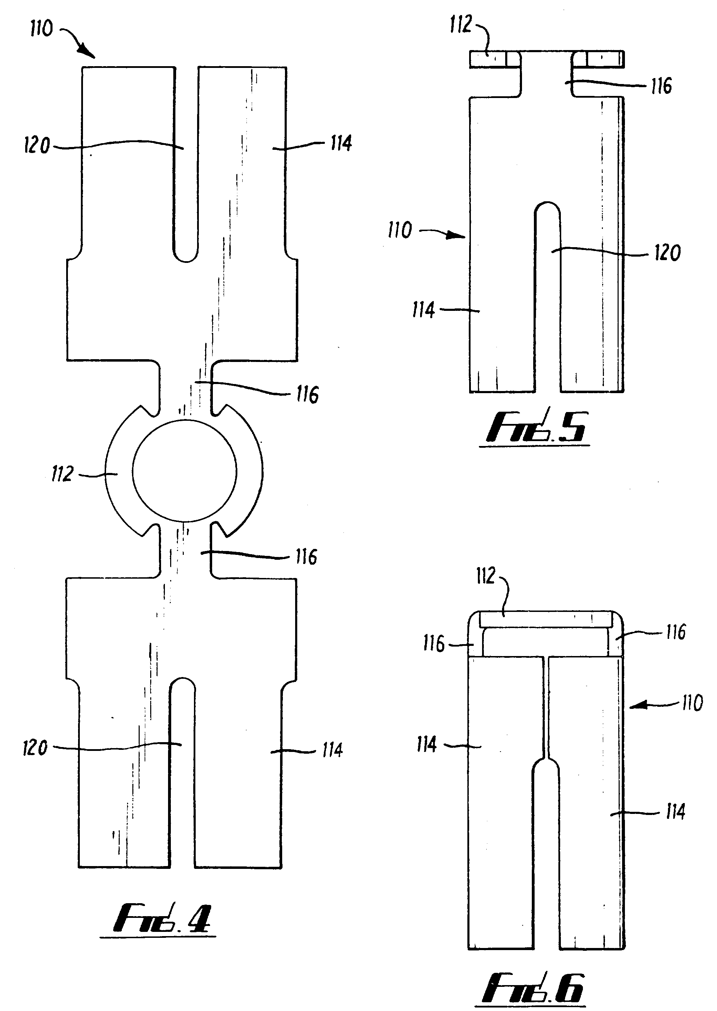

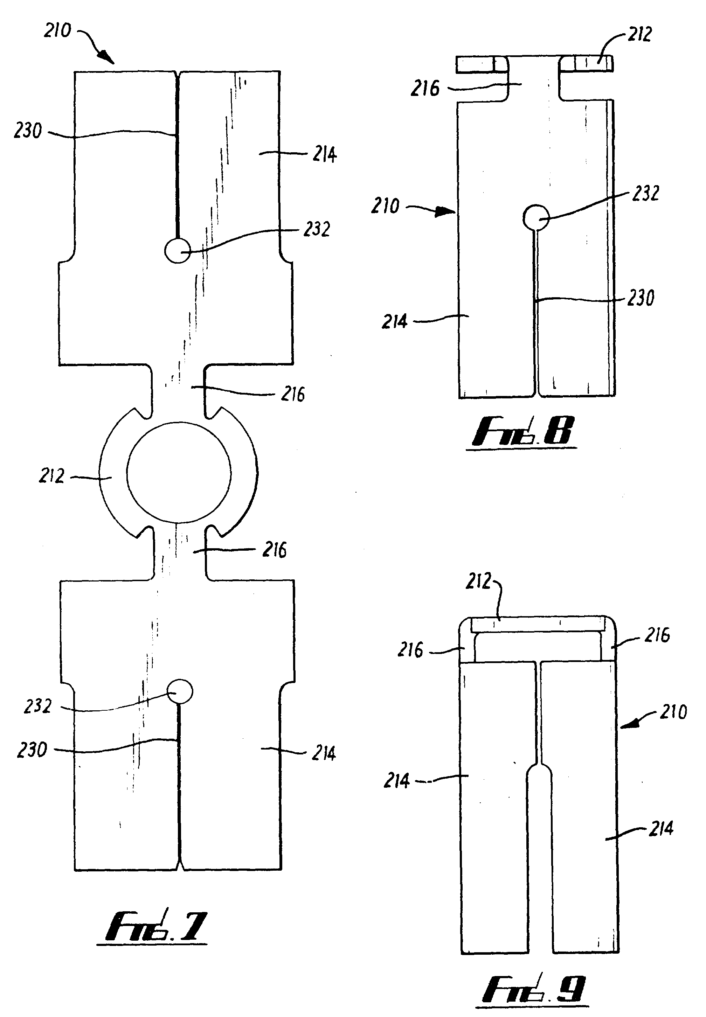

Over and above the outline shaping operations that produce a real or hypothetical sleeve blank 10 as illustrated in Fig. 1, each of the wings 14 has both of its outer edges depressed in a common direction with respect to a hypothetical median line passing down both wings 14 and also passing through the centre of the annular collar 12, such that each of the wings 14 becomes approximately hemi-cylindrical. Next, the struts 16 are each bent adjacent their respective juncture with the collar 12, such as to bring the two hemi-cylindrical wings 14 together, edge-to-edge, to form a cylindrical periphery of the finished sleeve. The collar 12 now lies at one end of the sleeve, substantially coaxial with the longitudinal axis of the cylinder formed by the juxtaposed wings 14, as shown in Figs. 2 and 3. At this stage, the sleeve may be finally parted from the remainder of the original steel sheet if this has not already been done.

In use of the finished sleeve manufactured as described above, an anchor bolt stem with an integral conically tapered expander portion (not shown) is passed through the sleeve from the end opposite the collar 12 until the conically tapered "expander" end of the bolt stem lies loosely within the non-collar end of the sleeve, and the threaded end of the bolt stem projects through the collar 12. This "bolt projecting" anchor bolt assembly is then inserted into a pre-drilled hole to the required embedment depth. A nut is then screwed down the projecting threaded end of the bolt stem to bear against the periphery of the hole in the solid material or substrate, either directly or through an intermediate washer or article to be secured by the anchor bolt assembly. Upon tightening of the nut, the expander end of the bolt stem is axially pulled between the wings 14 to expand them radially against the wall of the hole. Further tightening of the anchor bolt fixing generates a clamping force which secures the fixing to the solid material or substrate. In the event of the fixture not being in firm local contact with the surface of the solid material or substrate when the fixing is torqued, the struts (16) are capable of collapsing axially, thus permitting the fixture to be drawn towards the solid material or substrate and effecting the required clamping force between the fixture and the solid material or substrate. A tubular compression bush (eg as shown in Figs. 19 and 20) may be incorporated in the anchor bolt assembly between the nut and the collar of the sleeve to transfer axial compressive forces from the nut to the sleeve.

The finished sleeve may also be used with anchor bolts in which the tapered expander is in the form of a tapered nut into which the threaded portion of the bolt is engaged (eg as shown, with a slightly different embodiment of sleeve, in Figs. 19 and 20). The expander nut is then drawn into the sleeve by rotation of the bolt (by means of a spanner or other suitable tool applied to an external bolt head) to expand the sleeve and fix the anchor bolt within the hole.

The form of the sleeve blank 10 illustrated in Fig. 1 provides struts 16 which are substantially axial in the finished sleeve produced from the blank 10, but other shapes of axially collapsible strut are possible. For example, the struts in the sleeve blank may be shaped to be axially skewed in the finished blank, or they may be cranked or notched to enhance their tendency to axial collapse under a suitable magnitude of axially-applied stress in a tightened anchor bolt assembly. (A form of reduced-thickness strut is detailed in Fig. 22). More than one strut may join each wing to the end collar in the finished sleeve.

The embodiment of a sleeve blank 10 illustrated in Fig. 1 provides two hemi-cylindrical wings 14, but more than two such wings may be formed and shaped to have part-circular transverse sections, preferably collectively forming a substantially cylindrical periphery of the finished sleeve. In the finished sleeve, each such wing will be linked to the collar by one or more axially collapsible struts.

The finished sleeve may be formed to be expanded at both ends thereof, in conjunction with a suitable double expander.

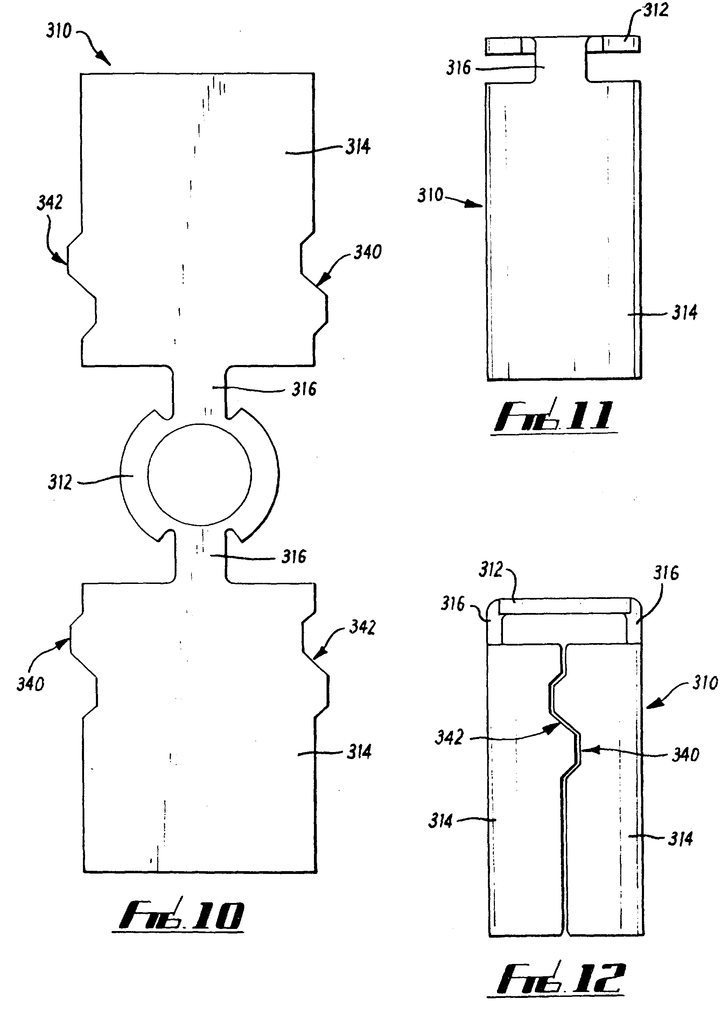

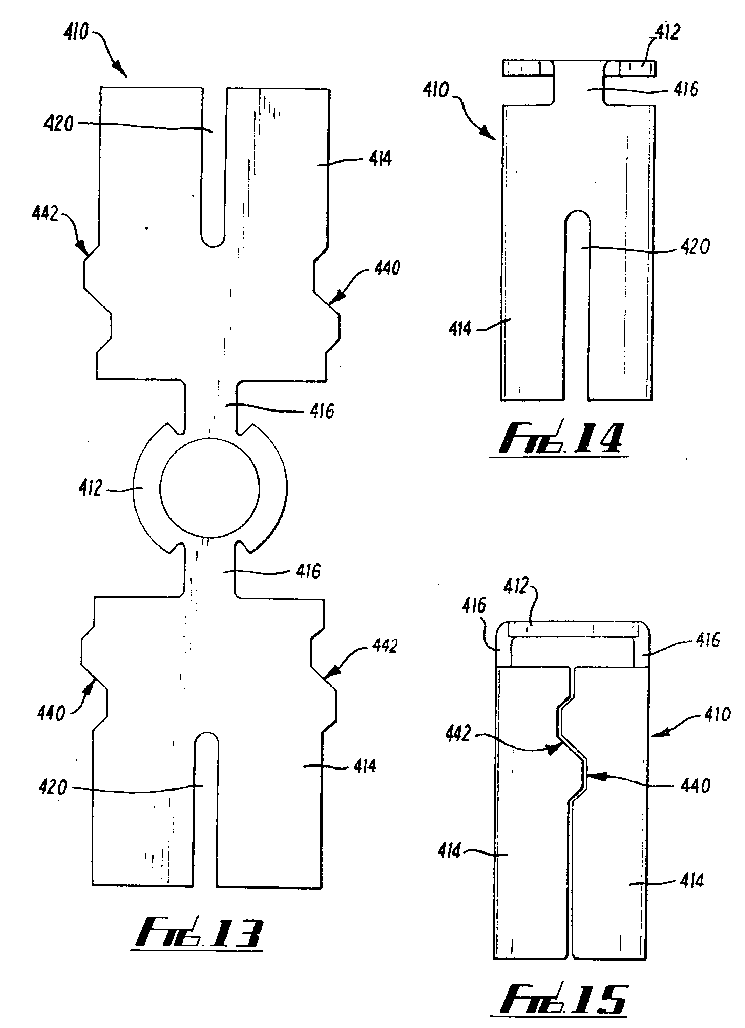

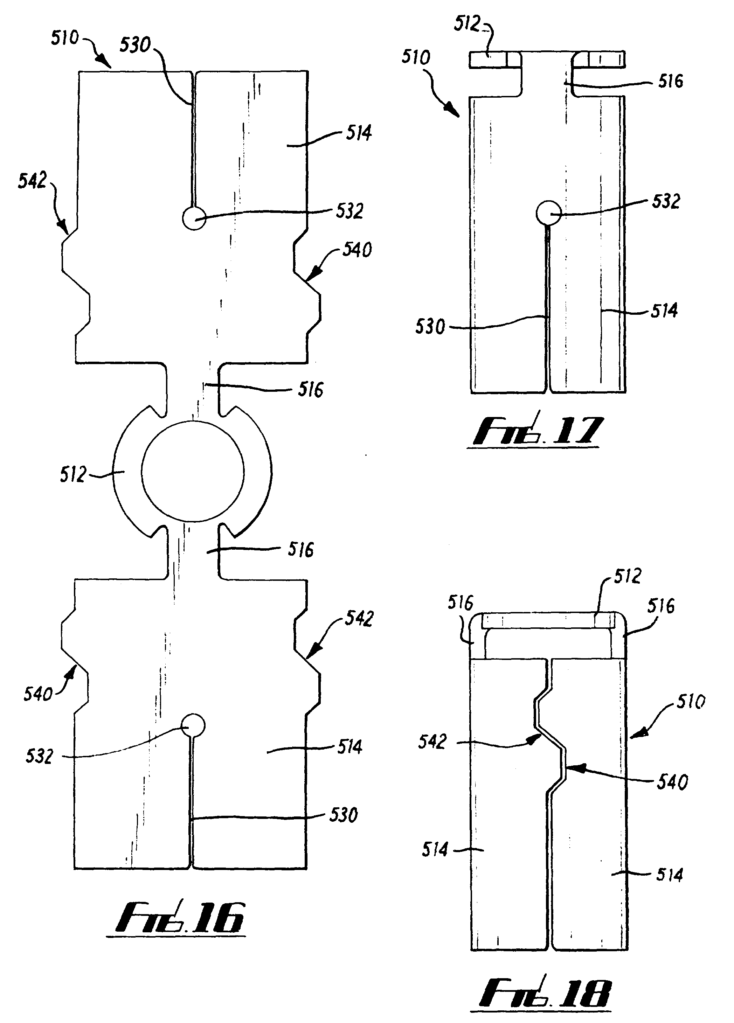

Referring now to Fig. 4, this illustrates a second embodiment of sleeve blank 110 which is largely similar to the first embodiment described above with reference to Fig. 1, but which is modified relative to the first embodiment by the provision of a respective circumferentially central and axially extending slot 120 in each of the wings 114. The slots 120 convert the effectively "two-segment" sleeve 10 to the "four-segment" sleeve 110 shown (in blank form) in Fig. 4, and (in ready-to-use shaped form) in Figs. 5 and 6, while maintaining this effectively multi-segment sleeve as a unitary piece of material. The mechanical properties of the slotted wings 114 can be adjusted by suitably varying the axial length and circumferential width of the slots 120. More than one such slot 120 could be formed in each of the wings 114 to increase the equivalent number of segments in the finished sleeve, though with an increasing number (and/or size) of such slots, the circumferential extent of the wings 114 is correspondingly reduced, potentially reducing in-hole anchorage of the sleeve and/or weakening the multi-slotted wings.

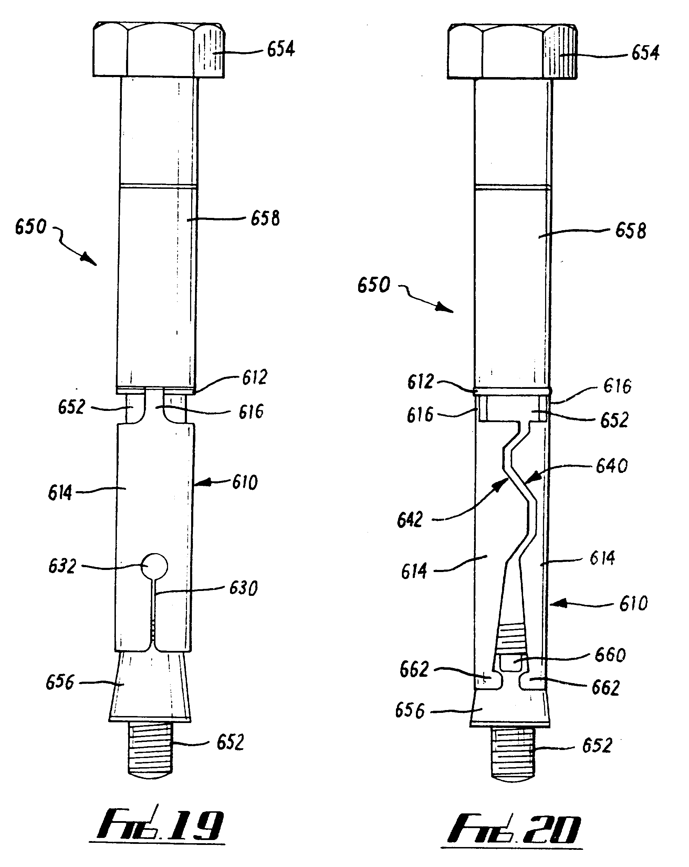

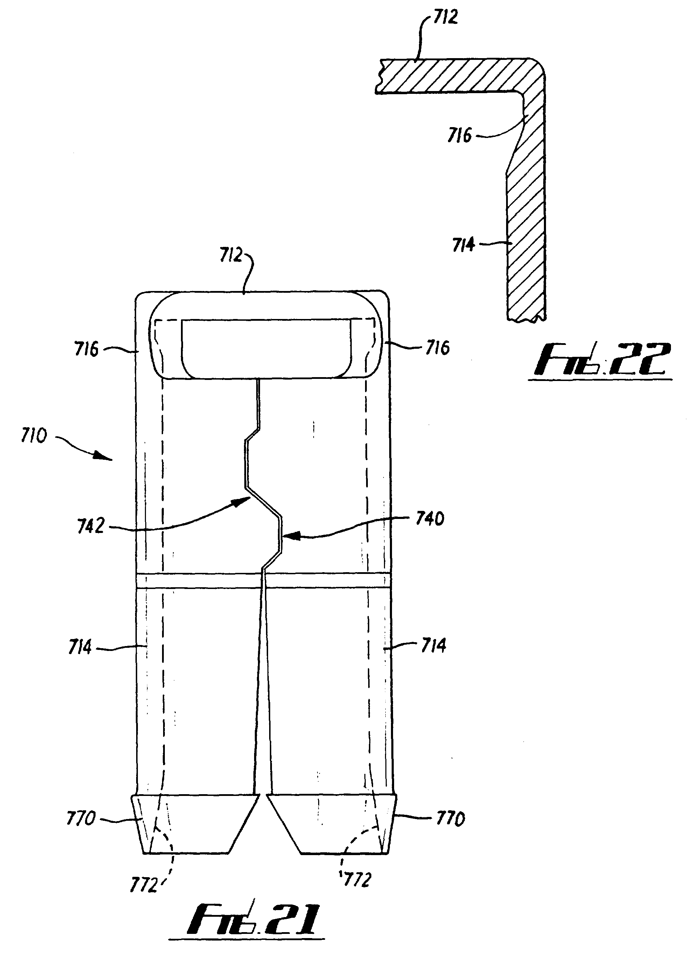

Fig. 7 illustrates a variant of the second embodiment of Fig. 4, in which the slots 120 are substituted by relatively narrow axial slits 230 to increase the effective number of segments while retaining as much wing surface as feasible. A respective hole 232 at the inboard end of each slit 230 inhibits unintended splitting of the wings 214 by crack propagation at the inboard ends of simple (hole-free) slits in the high-stress conditions of use of the sleeve 210 (shown in ready-to-use shaped form in Figs. 8 and 9). Since the punching of slits which are narrow relative to the thickness of the metal may overstress and fracture the punch, as an alternative to forming through-metal slits, the sheet metal of the blank 210 could be substantially thinned along an axial line in each wing 214 by simultaneous non-through punching on both sides of the blank. The resultant double-sided notch (not shown) is a line of weaknesses which readily splits when tightening the anchor bolt in which such a notched sleeve is employed, so giving the effect of pre-formed narrow slits but without the concomitant risk of damage to the forming tool. The inboard ends of such notches are preferably through perforated to pre-form holes equivalent to the holes 232, so as to inhibit unintended splitting beyond the notch-weakened portions of the sleeve wings.

Figs. 10-18 show three further embodiments of sleeve equivalent to the three embodiments illustrated in Figs. 1-9, but with a common modification now to be detailed.

In use of the sleeves so far described, with their respective pairs of hemi-cylindrical wings, there is a possibility of relative axial shifting of the wings, and such mutual misalignment is preferably avoided.

The common modifications of the three further embodiments of Figs. 10-18 is designed to obviate or at least reduce the probability of relative axial shifting of the wings.

Referring particularly to Fig. 10, the common modification consists of forming the edges of each wing 314, at least in the parts thereof relatively closer to the collar 312, with a zig-zag shape. The zig-zag shape 340 on the clockwise side of each wing 314 is oppositely handed to the zig-zag shape 342 on the opposite or anti-clockwise side of each wing 314. Such opposite handing of the zig-zag shapes 340 and 342 results in their mutual interdigitation in the fully formed sleeve 310, as may be particularly seen in Fig. 12, and consequently obviates or inhibits relative axial shifting of the wings 314 by reason of mutual axial interference of the zig-zag shapes 340 and 342. In other respects the sleeve 310 matches the sleeve 10 (compare, for example, Fig. 11 with Fig. 2).

Similarly, the sleeve 410 (Figs. 13-15) matches the sleeve 110 (Figs. 4-6) other than in respect of the structure and function of the zig-zag wing edge shapes 440 and 442.

Likewise, the sleeve 510 (Figs. 16-18) matches the sleeve 210 (Figs. 7-9) other than in respect of the structure and function of the zig-zag wing edge shapes 540 and 542.

Turning now to Figs. 19 and 20, these are mutually orthogonal side elevational views of a sleeve 610 which is a seventh exemplary embodiment of the sleeve part of the present invention, the sleeve 610 being incorporated into an assembly of components constituting an anchor bolt 650 which is an exemplary embodiment of the present invention.

The sleeve 610 is generally similar to the sleeve 510 described above with particular reference to Figs. 16-18 and with general reference to the preceding Figures. The sleeve 610 differs from the sleeve 510 in respect of certain relative proportions, but apart from these dimensional differences, the structure and function of the sleeve 610 matches those of the sleeve 510.

The anchor bolt 650 as a whole is of the aforementioned "loose bolt" type of fixing, and comprises an axially elongate machine-threaded screw 652 with a conventional hexagonal head 654 at the outer end thereof (the upper end as viewed in Figs. 19 and 20). The fully formed sleeve 610 is located over the inner end of the screw 652 (the lower half of the screw 652 as viewed in Figs. 19 and 20). A conically tapered nut 656 having an internal machine thread is screwed onto the inner end of the screw 652 (the lower end as viewed in Figs. 19 and 20) to partially enter the lower end of the sleeve 610, ie the expansible end of the sleeve 610 axially opposite the sleeve collar 612. A tubular compression bush 658 in the form of a plain cylindrical sleeve is fitted around the outer half of the screw 652 (the upper half of the screw 652 as viewed in Figs. 19 and 20) to be located axially between the screw head 654 and the sleeve collar 612. The outer diameter of the bush or plain sleeve 658 is marginally less than the outer diameter of the sleeve 610 when unexpanded such that the bush 658 will not be an interference fit in a pre-drilled hole (not illustrated) into which the sleeve 610 can be inserted (when part of the anchor bolt assembly) as a step in the installation of the anchor bolt 650. The bush 658 is substantially free on the shaft of the screw 652 to transmit compressive forces between the bolt head 654 and the sleeve collar 612 as induced by relative rotation of the screw 652 and the nut 656 in a sense tending to draw the nut 656 into the inner end of the sleeve 610 (ie upward movement of the nut 656 into the lower end of the sleeve 610 as viewed in Figs. 19 and 20).

In use of the anchor bolt 650, a hole with a suitable diameter and depth is drilled in the solid material or substrate (which may, for example, be concrete, stone, or brickwork). The hole is then cleared of debris. The hole diameter is preferably just sufficient to allow the anchor bolt 650 to be inserted without excessive resistance. The hole is preferably at least deep enough to allow the sleeve 610 to lie entirely beneath the surface of the material in which the hole is drilled, and to leave the screw head 654 proud of the material by no more than the local thickness of the fixture to be held by the anchor bolt 650.

The sleeve 610 and the nut 656 are detached from the screw 652 and inserted into the hole. (To facilitate this step in the anchor bolt installation procedure, the nut 656 is made captive in the end of the sleeve 610 by means of a diametrically opposed pair of projections 660 on the nut 656 engaging with lugs 662 formed on the free corners of the sleeve wings 614).

Next, the fixture (not shown) is aligned over the hole, and the screw 652 is inserted through the fixture, into the hole, through the sleeve 610 pre-installed in the hole and engaged with the nut 656. (A washer (not shown) may be located around the bush 658 to lie between the fixture and the underside of the screw head 654). By means of a spanner or other suitable tool applied to the screw head 654, the screw 652 is rotated to draw the expander nut 656 into the end of the sleeve 610 (ie the end opposite the collar 612), thus forcing the sleeve wings 614 apart and into firm contact with the bore of the hole.

Further tightening of the screw 652 up to the requisite torque results in an axial force on the nut 656 which is reacted by the anchorage of the sleeve 610 in the bore of the hole. Ideally, the axial force is transmitted through the material surrounding the hole, and through the fixture to the screw head 654. However, if the sleeve of an equivalent prior-art anchor bolt has been pre-installed at an insufficient depth in the hole and/or if the sleeve has moved outwards from a minimum correct depth before becoming anchored in the hole, the axial force is reacted through the bush or an equivalent spacer rather than through the fixture, resulting in an inadequate clamping force despite the screw being fully tightened. The sleeve of the present invention avoids this problem of prior art sleeves, since in the event that the sleeve-expanding force applied by the nut 656 reacts through the bush 658 rather than through the substrate material and the fixture, the struts 616 will buckle and collapse, thus shortening the effective axial length of the sleeve 610 and transferring the force from the nut 656 to a path through the sleeve wings 614, the surrounding substrate material, and the fixture out to the screw head 654. Collapse of the struts 616 thereby maximises anchorage of the anchor bolt 650 and maximises the intended clamping of the fixture to the face of the solid material or substrate.

The same solution to the problem of prior art sleeves results from use of a sleeve forming part of an anchor bolt assembly according to the present invention where such an anchor bolt is of the aforementioned "bolt projecting" type of anchor bolt (not shown), ie where the expander is integral with the inner end of the screw, and instead of an integral head on the outer end of the screw, a conventional nut or similar female-threaded fastener member is screwed on to the outer end of the screw to anchor the sleeve and clamp the fixture.

An eighth embodiment of sleeve forming part of the present invention is shown in Fig. 21. This form of sleeve 710 is somewhat similar to the sleeve 310 (Figs. 10-12), but differs principally in that the free ends of the wings 714 (the lower ends of the wings 714 as viewed in Fig. 21) are externally thickened relative to the thickness of the remainder of the sheet-form wings 714, and are both externally and internally chamfered. The external chamfer 770 assists in the insertion of the sleeve 710 in the pre-drilled hole (in an anchor bolt installation procedure as previously detailed), while the internal chamfer 772 provides an increased area of contact with a conical expander (not shown in Fig. 21) in use of the sleeve 710.

To enhance the collapsibility of the sleeve struts 716, they are formed with a reduced thickness adjacent their junctures with the collar 712, as shown to an enlarged scale in Fig. 22 which is a radial section detail of the upper right portion of the sleeve 710 as shown in Fig. 21.

Compared to conventional anchor bolt sleeves which are radially expansible and axially collapsible, but which are formed of an assembly of components, the press-formed sleeve forming part of the present invention can be manufactured at relatively high speed and relatively low cost. Such sleeves are preferably formed from stainless steel sheet of a suitable grade, but can also be formed from any other suitable metal or other material.

Certain modifications and variations of the invention have been described above but the invention is not restricted thereto, and other modifications and variations can be adopted without departing from the scope of the invention as defined by the claims. For example, certain possible modifications and variations of the shape and/or thickness of the struts described in respect of the first embodiment of the sleeve can equally be adopted for the struts in the other embodiments of sleeve.

## Claims

1. An anchor bolt (650) comprising an assembly of a radially expansible and axially collapsible sleeve (610) with an axially elongate and externally screw-threaded fastener means (652), characterised in that said sleeve (610) comprises a closed collar (612) at one end of the sleeve (610), said sleeve (610) further comprising a plurality of wings (614) angularly distributed around the sleeve (610), each said wing (614) being linked to said closed collar (612) by at least one respective strut (616) which is collapsible upon a sufficient axial stress being applied to said sleeve (610); said collar (612), wings (614), and struts (616) being formed as a unitary component, said fastener means (652) extending axially through said sleeve (610) and through said closed collar (612) at said one end of said sleeve (610), and an externally tapered expander means (656) being internally engaged with said fastener means (652) and externally engaged or engageable with the other end of said sleeve (610) opposite said one end of said sleeve (610).

2. An anchor bolt (65) as claimed in Claim 1 characterised in that said sleeve (610) is such that said plurality of wings (614) collectively form a substantially cylindrical periphery of said sleeve (650).

3. An anchor bolt (650) as claimed in Claim 1 or Claim 2 characterised in that said plurality of wings (614) numbers two and each said wing (614) has a substantially hemi-cylindrical transverse section.

4. An anchor bolt (650) as claimed in any preceding Claim characterised in that said anchor bolt (650) further comprises a compression bush means (658) encompassing said fastener means (652) on a portion thereof projecting through said collar (612) away from the remainder of said sleeve (610), said compression bush means (658) being axially slidable on said fastener means (652) to apply axial compressive forces to said collar (610) in a direction tending to cause collapse of said struts (614) in use of said anchor bolt (650).

5. An anchor bolt (650) as claimed in any preceding Claim characterised in that said expander means (656) has the form of an internally-threaded nut in screw-threaded engagement with the external screw thread on said fastener means (652), and said fastener means has a tool-engageable head (654) integrally formed on the outer end thereof.

6. An anchor bolt as claimed in any of Claims 1 to 4 characterised in that said expander means is engaged with said fastener means by being permanently secured thereto or formed integrally therewith, and said fastener means has a nut or like fastener element screw-threaded onto the outer end of said fastener means.

7. A method of manufacturing an anchor bolt comprising an assembly of a radially expansible and axially collapsible sleeve with an axially elongate and externally screw-threaded fastener means together with an externally tapered expander means, said method comprising the steps of providing a sheet of ductile material, removing portions of said material from said sheet to provide a closed annulus from which extend a plurality of radially-extending wings at angularly spaced positions around the annulus, each of the wings being connected to the annulus through at least one respective strut of reduced strength as compared to the wing, and bending each of the wings and its associated strut or struts about the collar until the wings extend substantially normal to the plane of the annulus thereby to form said sleeve with said collar at one end of thereof, said method further comprising the additional steps of providing a said fastener means and a said expander means, locating said sleeve around said fastener means such that said fastener means extends axially through said sleeve and through said collar at said one end of said sleeve, and internally engaging said expander means with said fastener means such that said expander means is externally engaged or engageable with the other end of said sleeve.

8. A method as claimed in Claim 7 characterised in that said wings are each subjected to shaping so as to adopt a respective part-cylindrical form.

9. A method as claimed in Claim 7 or Claim 8 characterised by additionally comprising the further steps of providing a compression bush means and including said compression bush means in the assembly such that said compression bush means encompasses said fastener means on a portion thereof projecting through said collar away from the remainder of said sleeve, said compression bush means being axially slidable on said fastener means to apply axial compressive forces to said collar in a direction tending to cause collapse of said struts in use of the anchor bolt.

10. A kit of parts for assembling an anchor bolt (650) as claimed in any of Claims 1 to 6, characterised in that said kit of parts comprises a sleeve (610), a fastener means (652), and an expander means (656); said sleeve (610) being radially expansible and axially collapsible; said sleeve (610) comprising a closed collar (612) at one end of the sleeve (610); said sleeve (610) further comprising a plurality of wings (614) angularly distributed around the sleeve (610); each said wing (614) being linked to said collar (612) by at least one respective strut (616) which is collapsible upon a sufficient axial stress being applied to said sleeve (610); said collar (612), wings (614) and struts (616) being formed as a unitary component; said fastener means (652) being axially elongate and externally screw-threaded and being capable of extending axially through the sleeve and collar; and said expander means (656) being externally tapered so as to be engagable with the sleeve and being internally engageable with said fastener means.

11. A kit of parts as claimed in Claim 11, said kit of parts being characterised by further comprising a compression bush means (658) dimensioned to be axially slidable on said fastener means (652).

## Patentansprüche

1. Ankerschraube (650), die aus einem Zusammenbau einer radial aufweitbaren und axial zusammenklappbaren Hülse (610) mit einer axial länglichen und außen mit einem Schraubgewinde versehenen Befestigungseinrichtung (652) besteht, dadurch gekennzeichnet, daß die Hülse (610) einen geschlossenen Bund (612) an einem Ende der Hülse (610) aufweist, daß die Hülse (610) weiterhin eine Vielzahl von Flügeln (614) aufweist, die um die Hülse (610) herum winkelmäßig verteilt sind, wobei jeder Flügel (614) mit dem geschlossenen Bund (612) durch wenigstens eine betreffende Strebe (616) verbunden ist, die bei einer auf die Hülse (610) ausgeübten, genügenden axialen Beanspruchung zusammenklappbar ist; wobei der Bund (612), die Flügel (614) und die Streben (616) als eine einheitliche Komponente ausgebildet sind, die Befestigungseinrichtung (652) axial durch die Hülse (610) und durch den geschlossenen Bund (612) an dem einen Ende der Hülse (610) hindurch verläuft und eine außen konische Expandereinrichtung (656) innen mit der Befestigungseinrichtung (652) im Eingriff ist und außen mit dem anderen Ende der Hülse (610) entgegengesetzt zu dem einen Ende der Hülse (610) im Eingriff ist oder in Eingriff bringbar ist.

2. Ankerschraube (650) nach Anspruch 1, dadurch gekennzeichnet, daß die Hülse (610) von solcher Art ist, daß die Vielzahl der Flügel (614) zusammengefasst einen im wesentlichen zylindrischen Umfang der Hülse (610) bilden.

3. Ankerschraube (650) nach Anspruch 1 oder Anspruch 2, dadurch gekennzeichnet, daß die Vielzahl der Flügel (614) zwei beträgt und jeder Flügel (614) einen im wesentlichen halbzylindrischen Querschnitt hat.

4. Ankerschraube (650) nach einen der vorhergehenden Ansprüche, dadurch gekennzeichnet, daß die Ankerschraube (650) weiter eine Druckbüchseneinrichtung (658) aufweist, welche die Befestigungseinrichtung (652) an einem Bereich davon umgibt, der durch den Bund (612) hindurch weg von dem Rest der Hülse (610) vorsteht, wobei die Druckbüchseneinrichtung (658) auf der Befestigungseinrichtung (652) axial verschiebbar ist, um axiale Druckkräfte auf den Bund (612) in einer Richtung auszuüben, die dazu neigt, ein Zusammenklappen der Streben (614) bei der Verwendung der Ankerschraube (650) zu bewirken.

5. Ankerschraube (650) nach einem der vorhergehenden Ansprüche, dadurch gekennzeichnet, daß die Expandereinrichtung (656) die Ausbildung einer Mutter mit Innengewinde aufweist, die mit dem äußeren Schraubgewinde an der Befestigungseinrichtung (652) im Schraubgewindeeingriff ist, und daß die Befestigungseinrichtung einen mit einem Werkzeug in Eingriff bringbaren Kopf (654) hat, der an dem äußeren Ende davon einstückig ausgebildet ist.

6. Ankerschraube nach einen der Ansprüche 1 bis 4, dadurch gekennzeichnet, daß die Expandereinrichtung mit der Befestigungseinrichtung im Eingriff ist durch einen dauerhafte Befestigung daran oder durch eine einstückige Ausbildung damit, und daß die Befestigungseinrichtung eine Mutter oder ein ähnliches Befestigungselement hat, welches auf das äußere Ende der Befestigungeinrichtung aufgeschraubt ist.

7. Verfahren zur Herstellung einer Ankerschraube, die aus einem Zusammenbau einer radial aufweitbaren und axial zusammenklappbaren Hülse mit einer axial länglichen und außen mit einem Schraubgewinde versehenen Befestigungseinrichtung zusammen mit einer außen konischen Expandereinrichtung besteht, wobei das Verfahren aus den Stufen der Bereitstellung eines Flächengebildes aus einem duktilen Material besteht, der Entfernung von Bereichen dieses Materials von dem Flächengebilde zur Bereitstellung eines geschlosssenen Ringes, von welchem eine Vielzahl von radial verlaufenden Flügeln an winkelmäßig beabstandeten Positonen um den Ring herum verlaufen, wobei jeder Flügel mit dem Ring über wenigstens eine betreffende Strebe einer verringerten Festigkeit im Vergleich zu dem Flügel verbunden ist, und einem Biegen jedes Flügels und seiner zugeordneten Strebe oder den Streben um den Bund, bis die Flügel im wesentlichen senkrecht zu der Ebene des Ringes verlaufen, um dadurch die Hülse mit dem Bund an dem einen Ende davon auszubilden, wobei das Verfahren weiterhin die zusätzlichen Stufen der Bereitstellung der Befestigungseinrichtung und der Expandereinrichtung aufweist, die Anordnung der Hülse um die Befestigungseinrichtung herum in solcher Art und Weise, daß die Befestigungseinrichtung axial durch die Hülse und durch den Bund an dem einen Ende der Hülse hindurch verläuft, und den inneren Eingriff der Expandereinrichtung mit der Befestigungseinrichtung in solcher Art, daß die Expandereinrichtung außen mit dem anderen Ende der Hülse im Eingriff ist oder in Eingriff bringbar ist.

8. Verfahren nach Anspruch 7, dadurch gekennzeichnet, daß die Flügel jeweils einer solchen Formgebung unterworfen werfen, daß sie eine betreffende, teilzylindrische Form annehmen.

9. Verfahren nach Anspruch 7 oder Anspruch 8, dadurch gekennzeichnet, daß es zusätzlich die weiteren Stufen der Bereitstellung einer Druckbüchseneinrichtung aufweist und der Eingliederung dieser Druckbüchseneinrichtung in den Zusammenbau in solcher Art, daß die Druckbüchseneinrichtung die Befestigungseinrichtung an einem Bereich davon umgibt, der durch den Bund hindurch weg von dem Rest der Hülse vorsteht, wobei die Druckbüchseneinrichtung auf der Befestigungseinrichtung axial verschiebbar ist, um eine axiale Druckkraft auf den Bund in einer Richtung auszuüben, die dazu neigt, ein Zusammenklappen der Streben bei der Verwendung der Ankerschraube zu bewirken.

10. Bausatz von Teilen zum Zusammenbau einer Ankerschraube (650) nach einem der Ansprüche 1 bis 6, dadurch gekennzeichnet, daß der Bausatz der Teile aus einer Hülse (610), einer Befestigungseinrichtung (652) und einer Expandereinrichtung (656) besteht; wobei die Hülse (610) radial aufweitbar und axial zusammenklappbar ist; wobei die Hülse (610) einen geschlossenen Bund (612) an einem Ende der Hülse (610) aufweist; wobei die Hülse (610) weiter eine Vielzahl von Flügeln (614) aufweist, die winkelmäßig um die Hülse (610) herum verteilt sind; wobei jeder Flügel (614) mit dem Bund (612) durch wenigstens eine betreffende Strebe (616) verbunden ist, die bei der Ausübung einer genügenden axialen Beanspruchung auf die Hülse (610) zusammenklappbar ist; wobei der Bund (612), die Flügel (614) und die Streben (616) als eine einheitliche Komponente ausgebildet sind; wobei die Befestigungseinrichtung (652) axial länglich und außen mit einem Schraubgewinde versehen sowie dazu fähig ist, axial durch die Hülse und den Bund hindurch zu verlaufen; und wobei die Expandereinrichtung (656) außen konisch ist, um mit der Hülse in Eingriff bringbar zu sein, und innen mit der Befestigungseinrichtung in Eingriff bringbar ist.

11. Bausatz von Teilen nach Anspruch 11, dadurch gekennzeichnet, daß der Bausatz weiter eine Druckbüchseneinrichtung (658) aufweist, die für eine axiale Verschiebbarkeit auf der Befestigungseinrichtung (652) dimensioniert ist.

## Revendications

1. Boulon d'ancrage (650) constitué par l'association d'un manchon (610) susceptible de se dilater radialement et de s'écraser axialement et d'un moyen de fixation (652) allongé axialement et comportant un filetage extérieur, caractérisé en ce que ledit manchon (610) comporte un anneau fermé (612) à l'une des extrémités du manchon (610), ledit manchon (610) comportant en outre plusieurs ailes (614) réparties angulairement de façon régulière autour du manchon (610), chacune desdites ailes (614) étant reliée audit anneau fermé (612) par au moins une languette (616) susceptible de s'écraser sous l'effet d'une contrainte axiale suffisante appliquée sur ledit manchon (610) ; ledit anneau fermé (612), lesdites ailes (614) et lesdites languettes (616) ne formant qu'un seul élément, ledit moyen de fixation (652) passant axialement à travers ledit manchon (610) et à travers ledit anneau fermé (612) à la première extrémité susdite dudit manchon (610), et un moyen d'expansion (656) extérieurement conique en prise intérieurement avec ledit moyen de fixation (652) et extérieurement en prise, ou susceptible d'être en prise, avec la seconde extrémité dudit manchon (610) située à l'opposé de ladite première extrémité dudit manchon (610).

2. Boulon d'ancrage (650) selon la revendication 1, caractérisé en ce que ledit manchon (610) est conçu de telle sorte que lesdites ailes (614) forment ensemble la circonférence essentiellement cylindrique dudit manchon (610).

3. Boulon d'ancrage (650) selon l'une ou l'autre des revendications 1 et 2, caractérisé en ce que le nombre desdites ailes (614) est de deux, et en ce que la section transversale de chaque aile (614) a essentiellement la forme d'un demi-cylindre.

4. Boulon d'ancrage (650) selon l'une quelconque des revendications précédentes, caractérisé en ce que ledit boulon d'ancrage (650) comporte en outre un moyen de compression en forme de manchon (658) qui enveloppe ledit moyen de fixation (652) sur la partie de celui-ci qui passe à travers ledit anneau fermé (612) en s'éloignant du reste dudit manchon (610), ledit moyen de compression (658) étant susceptible de coulisser axialement sur ledit moyen de fixation (652) pour appliquer une contrainte de compression axiale sur ledit anneau fermé (612) dans une direction tendant à provoquer l' écrasement desdites languettes (614) lors de l'utilisation dudit boulon d'ancrage (650).

5. Boulon d'ancrage (650) selon l'une quelconque des revendications précédentes, caractérisé en ce que ledit moyen d'expansion (656) a la forme d'un écrou taraudé en prise vissée avec le filetage extérieur dudit moyen de fixation (652), et en ce que ledit moyen de fixation est doté d'une tête (654) prévue pour recevoir un outil et ne formant qu'une seule pièce avec son extrémité extérieure.

6. Boulon d'ancrage selon l'une quelconque des revendications 1 à 4, caractérisé en ce que ledit moyen d'expansion est en prise avec ledit moyen de fixation en étant fixé en permanence sur celui-ci ou en ne formant qu'une seule pièce avec celui-ci, et en ce que ledit moyen de fixation comporte un élément de fixation en forme d'écrou ou équivalent vissé sur l'extrémité extérieure dudit moyen de fixation.

7. Procédé de fabrication d'un boulon d'ancrage comprenant l'assemblage d'un manchon susceptible de se dilater radialement et de s'écraser axialement, et d'un moyen de fixation allongé axialement comportant un filetage extérieur et un moyen d'expansion extérieurement conique, ledit procédé comprenant les étapes d'approvisionnement d'une tôle en matériau ductile ; d'enlèvement de certaines parties de ladite tôle pour former un anneau fermé duquel partent plusieurs ailes s'étendant radialement et réparties angulairement de façon régulière autour de l'anneau, chacune des ailes étant reliée à l'anneau par au moins une languette individuelle dont la résistance est réduite par rapport à celle des ailes ; et le pliage de chacune des ailes avec la languette ou les languettes qui lui sont associées, par rapport à l'anneau, jusqu'à ce que les ailes se situent dans un plan pratiquement normal au plan de l'anneau, en formant ainsi ledit manchon avec ledit collier à l'une de ses extrémités ; ledit procédé comprenant en outre les étapes supplémentaires d'approvisionnement dudit moyen de fixation et dudit moyen d'expansion ; la mise en place dudit manchon autour dudit moyen de fixation, de telle sorte que ledit moyen de fixation passe axialement à travers ledit manchon et à travers ledit anneau à la première extrémité susdite dudit manchon, ledit moyen de fixation s'engageant à l'intérieur dudit moyen d'expansion de telle sorte que ledit moyen d'expansion soit en prise ou susceptible d'être en prise extérieurement avec la seconde extrémité dudit manchon.

8. Procédé selon la revendication 7, caractérisé en ce que chacune desdites ailes subit un formage de façon à prendre la forme d'une portion de cylindre.

9. Procédé selon l'une ou l'autre des revendications 7 et 8, caractérisé en ce qu'il comprend en outre les étapes supplémentaires d'approvisionnement d'un moyen de compression en forme de manchon et le montage dudit moyen de compression en forme de manchon de façon que celui-ci enveloppe ledit moyen de fixation sur la partie de celui-ci qui passe à travers ledit anneau en s'éloignant du reste dudit manchon, ledit moyen de compression en forme de manchon étant susceptible de coulisser axialement sur ledit moyen de fixation pour appliquer une contrainte de compression axiale sur ledit anneau dans une direction tendant à provoquer l'écrasement desdites languettes lors de l'utilisation dudit boulon d'ancrage.

10. Jeu de pièces permettant l'assemblage d'un boulon d'ancrage (650) selon l'une quelconque des revendications 1 à 6, caractérisé en ce que ledit jeu de pièces comprend un manchon (610), un moyen de fixation (652) et un moyen d'expansion (656) ; ledit manchon (610) étant susceptible de se dilater radialement et de s'écraser axialement ; ledit manchon (610) comprenant un anneau fermé (612) à l'une des extrémités du manchon (610) ; ledit manchon (610) comprenant en outre plusieurs ailes (614) réparties angulairement de façon régulière autour du manchon (610) ; chacune desdites ailes (614) étant reliée audit anneau fermé (612) par au moins une languette (616) susceptible de s'écraser sous l'effet d'une contrainte axiale suffisante appliquée sur ledit manchon (610) ; ledit anneau fermé (612), lesdites ailes (614) et lesdites languettes (616) ne formant qu'un seul élément ; ledit moyen de fixation (652) étant allongé axialement, comportant un filetage extérieur et étant susceptible de passer axialement à travers le manchon et l'anneau ; et ledit moyen d'expansion (656) étant extérieurement conique de façon à pouvoir s'engager à l'intérieur du manchon et étant susceptible d'être en prise intérieurement avec ledit moyen de fixation.

11. Jeu de pièces selon la revendication 10, ledit jeu de pièces étant caractérisé en outre en ce qu'il comprend un moyen de compression (658) en forme de manchon (658) dimensionné de façon à pouvoir coulisser axialement sur ledit moyen de fixation (652).
